(19) Europäisches Patentamt
European Patent Office
Office européen des brevets

(11) **EP 4 733 941 A1**

(12) **EUROPEAN PATENT APPLICATION**

(43) Date of publication:
**29.04.2026 Bulletin 2026/18**

(21) Application number: **25208937.0**

(22) Date of filing: **15.10.2025**

(51) International Patent Classification (IPC):
*G06F 11/10* (2006.01)

(52) Cooperative Patent Classification (CPC):
**G06F 11/1016**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.10.2024 US 202418923159**

(71) Applicant: **STMicroelectronics International N.V.**
**1228 Plan-les-Ouates, Geneva (CH)**

(72) Inventors:
• **RANJAN, Om**
**201310 Gautam Buddh Nagar, Uttar Pradesh (IN)**
• **SOOD, Vivek Kumar**
**226017 Lucknow (IN)**
• **BATRA, Simrata**
**110048 New Delhi (IN)**

(74) Representative: **Buzzi, Notaro & Antonielli d'Oulx S.p.A.**
**Corso Vittorio Emanuele II, 6**
**10123 Torino (IT)**

(54) **SRAM SAFETY ARCHITECTURE FOR HIGH INTEGRITY**

(57)    According to an embodiment, a circuit includes a memory cell array storing memory words with data bits, data check bits, and address check bits. An error correction code (ECC) logic circuit includes an address ECC generator circuit generating address check bits, a data ECC generator circuit generating data check bits, an address ECC checker circuit verifying address check bits, and a data ECC checker/correction circuit verifying and correcting data bits using data check bits. A logic circuit arranges the bits within each memory word based on a predetermined arrangement. The address check bits may be scrambled within each word, with at least one as the least or most significant bit. The address ECC may use Single Error Detection Double Error Decoding (SEDDED) and the data ECC may use Single Error Correction Double Error Detection (SECDED). The architecture provides enhanced error detection and correction capabilities for high-integrity memory applications.

600

FIG. 6

**Description**

**TECHNICAL FIELD**

The present disclosure generally relates to electronic devices and, in particular embodiments, to a safety architecture for high-integrity applications in SRAM.

**BACKGROUND**

Achieving exceptional fault coverage during runtime across all components is important for high-integrity applications targeting Automotive Safety Integrity Level D (ASIL-D) use cases. Among these, Static Random-Access Memory (SRAM) plays a major role in the overall failure rates in complex semiconductor systems. Currently, several strategies are employed to ensure high fault coverage. These strategies include duplicating memory segments, integrating dedicated fault detection circuits within the memory, and implementing software-level measures like content duplication or triplication.

As the industry advances to newer technology nodes such as 16nm, 7nm, 5nm, and lower, the usage of these nodes in automotive applications remains relatively new. These advanced nodes have been primarily used for low-integrity applications, heavily relying on software-based measures. However, there is an emerging trend to adopt these advanced technology nodes for high-integrity ASIL-D-rated automotive applications. This shift presents a significant challenge because vendor memory compilers do not offer built-in measures to achieve these critical applications' required runtime fault coverage.

**SUMMARY**

Technical advantages are generally achieved by embodiments of this disclosure, which describe a safety architecture for high-integrity applications in SRAM.

A first aspect relates to a circuit, comprising a memory cell array configured to store memory words, each memory word comprising data bits, data check bits, and address check bits; an error correction code (ECC) logic circuit comprising an address ECC generator circuit configured to generate the address check bits; a data ECC generator circuit configured to generate the data check bits; an address ECC checker circuit configured to verify the address check bits; and a data ECC checker/correction circuit configured to verify and correct the data bits using the data check bits; and a logic circuit configured to arrange the data bits, the data check bits, and the address check bits within each memory word based on a predetermined arrangement.

A second aspect relates to a system, comprising a memory controller; and a memory cell array coupled to the memory controller, the memory cell array configured to store memory words, each memory word comprising data bits, data check bits, and address check bits, wherein the memory controller comprises an error correction code (ECC) logic circuit configured to generate the address check bits and the data check bits for write operations; verify the address check bits and the data check bits for read operations; and correct errors in the data bits based on the data check bits.

A third aspect relates to a method, comprising receiving, by an address ECC generator circuit, a write address; generating, by the address ECC generator circuit, address check bits based on the write address; receiving, by a data ECC generator circuit, write data; generating, by the data ECC generator circuit, data check bits based on the write data; arranging, by a logic circuit, data bits of the write data, the data check bits, and the address check bits within a memory word based on a predetermined arrangement; and writing the arranged memory word to a memory cell array.

Embodiments can be implemented in hardware, software, or any combination thereof.

**BRIEF DESCRIPTION OF THE DRAWINGS**

For a more complete understanding of the present disclosure and the advantages thereof, reference is now made to the following descriptions taken in conjunction with the accompanying drawings, in which:

Figure 1 is a simple block diagram of a microcontroller configured with a memory cell array;
Figure 2 is a typical memory word of the memory cell array using SECDED;
Figure 3 is an embodiment memory word;
Figure 4 is an arrangement of an embodiment memory word;
Figure 5 is an arrangement of an embodiment memory word;
Figure 6 is an embodiment ECC logic circuit;
Figure 7 is a flow chart of an embodiment method for operating ECC logic circuit in write mode; and
Figure 8 is a flow chart of an embodiment method for operating ECC logic circuit in read mode.

**DETAILED DESCRIPTION OF ILLUSTRATIVE EMBODIMENTS**

This disclosure provides many applicable inventive concepts that can be embodied in a wide variety of specific contexts. The particular embodiments are merely illustrative of specific configurations and do not limit the scope of the claimed embodiments. Features from different embodiments may be combined to form further embodiments unless noted otherwise. Various embodiments are illustrated in the accompanying drawing figures, where identical components and elements are identified by the same reference number, and repetitive descriptions are omitted for brevity.

Variations or modifications described in one of the embodiments may also apply to others. Further, various changes, substitutions, and alterations can be made herein without departing from the spirit and scope of this disclosure as defined by the appended claims.

While the inventive aspects are described primarily in the context of Static Random-Access Memory (SRAM) in automotive applications, it should also be appreciated that these inventive aspects may also apply to other types of memory in other commercial or consumer applications. In particular, aspects of this disclosure may similarly apply to memory embedded within a microcontroller or memory external to a processor.

In embodiments, a memory protection system is proposed that advantageously offers significant flexibility and broad applicability without imposing specific requirements on memory design. This approach can be implemented on any memory without built-in safety features, making it a versatile solution for enhancing data integrity across various memory types.

The design efficiently utilizes memory resources by storing all information within a single memory cut, including data, ECC bits, and address check bits. This approach avoids data duplication, optimizing storage usage while maintaining robust error detection and correction capabilities. Combining these features provides a comprehensive safety enhancement solution that can be readily applied to various memory configurations without changing the underlying architecture. In embodiments, a memory architecture is proposed where the system separately computes address check bits, which are scrambled within each memory word. These address check bits are uniformly distributed across the data and ECC (Error-Correcting Code) bits, with attention given to placing at least one at each end of the wordline, which may vary based on the memory bank architecture. This distribution advantageously maximizes fault coverage across the memory cell array.

In embodiments, the data bits, the data ECC bits, and the address check bits are stored within the same memory cut, eliminating the need for separate storage components. This approach advantageously contributes to the system's low latency performance while achieving ASIL-D level coverage, the highest automotive safety integrity level.

An advantage of this system is the concurrent computation of address check bits, which occurs alongside other operations. This parallel processing results in shadowed latency, eliminating additional overhead that might otherwise impact system performance.

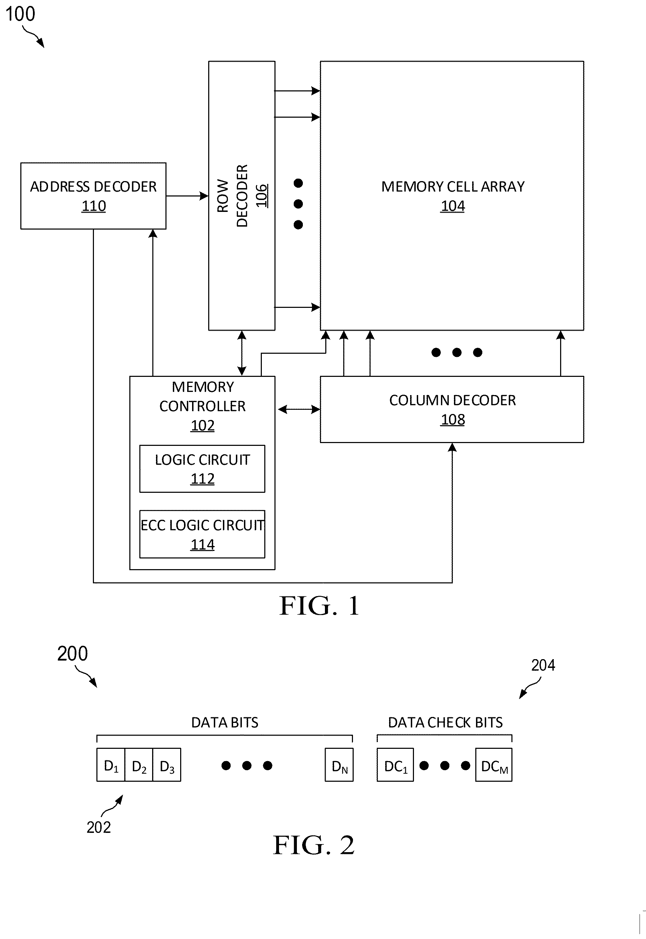

Figure 1 illustrates a simple block diagram of a microcontroller 100 configured with a memory cell array 104. In embodiments, the memory cell array 104 may be an off the shelf component. In embodiments, the memory cell array 104 may be integrated on chip. In embodiments, memory cell array 104 may be an external memory bank. Memory cell array 104 may be of the static random-access memory (SRAM) type. SRAM is a type of volatile memory used in various electronic devices. To operate an SRAM type memory, several components are arranged in a specific architecture to allow fast read and write operations.

As shown, microcontroller 100 includes a memory controller 102, a memory cell array 104, a row decoder 106, a column decoder 108, and an address decoder 110, which may (or may not) be arranged as shown. Microcontroller 100 may include additional components not shown. For example, microcontroller 100 may include sense amplifiers, input/output (I/O) buffers, an address bus, and a data bus. SRAM is commonly used in applications requiring high-speed data access, such as CPU caches, hard drive buffers, and networking equipment. Its low latency and ability to operate at high speeds make it ideal for scenarios where rapid data retrieval and storage are crucial.

The memory cell array 104, the core storage element, contains cells organized in rows and columns. It interfaces with row decoder 106 and column decoder 108 to allow access to specific memory locations for read and write operations.

In embodiments, the address decoder 110 receives input addresses and decodes them into separate signals for the row decoder 106 and the column decoder 108. The row decoder 106 selects the appropriate row in the memory cell array 104, while the column decoder 108 selects the specific column.

The memory controller 102 manages the overall operation of the microcontroller 100, coordinating the actions of other components. It receives external control signals (such as read/write commands) and generates internal control signals for the memory cell array 104, row decoder 106, column decoder 108, and address decoder 110.

For a write operation, the memory controller 102 activates the appropriate signals. The address decoder 110 processes the input address, the row decoder 106 and the column decoder 108 select the target memory cell, and the memory controller 102 enables the write operation to store data in the selected cell of the memory cell array 104.

For a read operation, address decoder 110 processes the address, row decoder 106 and column decoder 108 select the target cell, and memory controller 102 enables the read operation. The data from the selected memory cell is then output through the column decoder 108.

In microcontroller 100, data can be stored at different locations. The ideal scenario is that unique data can be stored at unique locations, typically ensured by the memory controller 102, the memory cell array 104, and the address decoder 110. Faults in any of these components can lead to issues that vary in difficulty to detect, potentially resulting in incorrect data being consumed by safety applications without detection, which poses a safety risk.

In the current semiconductor market, off-the-shelf memory (e.g., microcontroller 100) typically lacks built-in safety features. Memory vendors have been gradually developing and incorporating safety structures, but progress has been slow due to limited customer demand. Specialized safety solutions cannot be easily implemented in external IPs due to cost considerations and the generic nature of products from external vendors, who are generally hesitant to incorporate such specialized features into their standard offerings.

In embodiments, a memory architecture with additional storage bits is proposed to detect faults that can lead to corruption. Aspects of the present disclosure target different faults inside microcontroller 100 that can cause data corruption. In embodiments, data is encoded using Single Error Correction Double Error Detection (SECDED) Hamming codes, whereas the address is encoded into multiple error detection (no correction) Hamming codes. In embodiments, the address check bits are scrambled in the RAM word, with one bit placed at the extreme ends of the wordline, others close to the wordline driver buffer, and the remaining uniformly distributed across the word width. The placement of address check bits is distributed based on the wordline architecture of the memory cell array 104.

Compared to existing solutions, the proposed approach requires additional storage bits for address check bits instead of extra logic. Based on the protocol, the latency associated with the additional address bit fault check is masked due to the concurrent computation of the data fault check. Advantageously, the proposed solution uses external means to cover memory faults without additional demands on memory design.

SECDED has limitations in effectively addressing wordline faults. Single Error Detection Double Error Decoding (SEDDED) is employed to compensate for this weakness. SEDDED offers robust protection against address-related faults. By using SEDED to handle address issues, SECDED can focus on its strength of correcting errors in the actual data. These and additional details are further detailed below.

Figure 2 illustrates a typical memory word 200 of the memory cell array 104 using SECDED. Memory word 200 may be used for medium-resilience type of memory applications. Memory word 200 includes a data portion 202 and a data check bit portion 204. Memory word 200 allocates the data bits ($D_1$-$D_N$) of the data portion 202 for data storage, while the data check bits ($DC_1$-$DC_M$) of the data check bit portion 204 serve as data check bits for error detection and correction. Memory word 200 includes an N-bit data word with an M-bit data check bit, where N and M are integers greater than one.

The data bits ($D_1$-$D_N$) in the data portion 202 contain the information being stored or processed. The data check bits ($DC_1$-$DC_M$) in the data check bit portion 204 work in concert with the SECDED logic to maintain data integrity. The memory controller 102 uses the data check bits ($DC_1$-$DC_M$) to detect and correct errors in the data portion 202 of the memory. Specifically, the data check bit portion 204 enables the SECDED algorithm to perform its dual function of detecting single-or double-bit errors and correcting single-bit errors that may occur.

In SECDED, the total number of bits (N + M) for an N-bit data word using SECDED, the M number of check bits required can be calculated based on the following inequality: $2^M \geq N + M + 1$, where N is the number of data bits and M is the number of check bits. To find M, the inequality is solved for the smallest integer M that satisfies it.

For example, M equals 8 for a 64-bit data word with a total of 72 bits, 7 for a 32-bit data word with a total of 39 bits, 5 for a 16-bit data word with a total of 21 bits, and 4 for an 8-bit data word with a total of 12 bits.

The data check bits ($DC_1$-$DC_M$) enhance the reliability of the memory compared to non-ECC (Error Correcting Code) memory, as it can catch and rectify common errors that might otherwise lead to data corruption or system instability.

It should be noted that the arrangement of the data bits ($D_1$-$D_N$) and data check bits ($DC_1$-$DC_M$) in memory word 200 may not be fixed in a specific order. The physical arrangement can vary depending on the specific memory architecture and implementation. In some systems, the data check bits ($DC_1$-$DC_M$) may be interspersed with the data bits ($D_1$-$D_N$), placed at the beginning of the word, or distributed in other patterns.

Memory controller 102, logic circuit 112, and an ECC logic circuit 114 embedded within the memory controller 102 are designed to work with the specific bit arrangement, regardless of the physical layout. This flexibility allows memory designers to optimize the layout for signal integrity, manufacturing processes, or compatibility with existing systems. What remains constant is the total word width and the number of bits allocated for data and error correction, even if their physical positions within the word may differ. The memory controller 102 is responsible for correctly interpreting and utilizing these bits, regardless of their specific arrangement within the memory word 200.

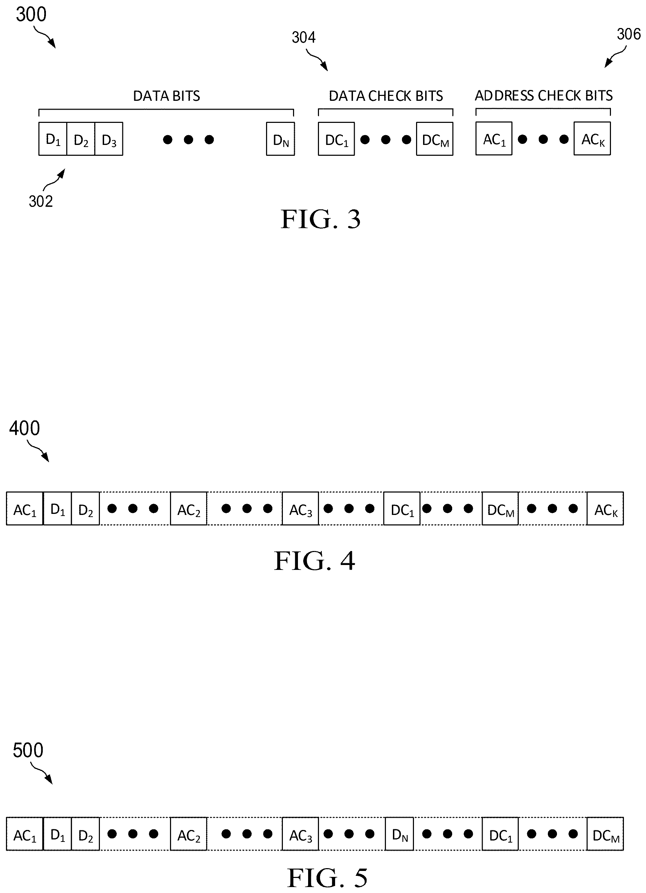

Figure 3 illustrates an embodiment memory word 300, which may be implemented in the memory cell array 104. Memory word 300 may be used for high-resilience type of memory applications. Memory word 300, similar to memory word 200, includes data bits ($D_1$-$D_N$) and data check bits ($DC_1$-$DC_M$). However, in contrast with memory word 200, memory word 300 additionally includes address check bit portion 306. Memory word 300 includes an N-bit data word, an M-bit data check bit, and a K-bit address check bit ($AC_1$-$AC_K$), where K is an integer greater than one. In embodiments, K can be equal to 4, 5, or 6. In an embodiment, K is equal to 5.

In an embodiment, M equals 8 and K equals 5 for a 64-bit data word with a total of 77 bits-a memory width equal to or greater than 77 bits. In an embodiment, M equals 7 and K equals 5 for a 32-bit data word with a total of 44 bits-a memory width equal to or greater than 44 bits. In an embodiment, M equals 5 and K equals 5 for a 16-bit data word with a total of 26 bits-a memory width equal to or greater than 26 bits. In an embodiment, M equals 5 and K equals 5 for an 8-bit data word with a total of 18 bits-a memory width equal to or greater than 18 bits. In embodiments where the memory width is greater than N + M + K, the additional memory locations can be zeroed out or can be used for additional or duplicate check bits.

In embodiments, memory cell array 104 to implement memory word 300 is an off the shelf component with a wider memory than that would be typically used with respect to the memory word 200, which does not include the address check bits. For example, the memory for memory word 300 is wider by K compared to the memory used for memory word 200. In the case of a memory cell array 104 that is embedded within microcontroller 100, designers increase the memory width of the memory cell array 104 to allow for the wider memory for the memory word 300. In embodiments, memory word 300 is implemented within a single, specific memory width that equals or is greater than the sum of N + M + K.

The address check bits $(AC_1-AC_K)$ of the address check bit portion 306 enhance reliability and safeguard against errors in memory addressing. The address check bits $(AC_1-AC_K)$ enable the detection of errors that may occur in address lines or during the address decoding process, which can result from various factors, including electrical noise or hardware faults. By verifying address integrity, the system prevents incorrect memory access, thereby contributing to overall system reliability. The address check bits $(AC_1-AC_K)$ complement data protection mechanisms like ECC, forming a comprehensive approach to memory system integrity. The address check bits $(AC_1-AC_K)$ aid in fault isolation, support memory scrubbing processes, and help meet stringent safety standards in critical applications such as automotive or aerospace systems.

ASIL-D is the highest level of safety requirements for automotive systems as defined by the ISO 26262 functional safety standard. Due to the critical nature of automotive safety systems, the requirements for high resiliency in memory at the ASIL-D level are particularly stringent. Memory word 300 can be implemented within high-resiliency memory in Automotive Safety Integrity Level D (ASIL-D) applications.

Before accessing the memory word 300, memory controller 102 receives the address and computes the ECC (Error Correction Code) for this address. In embodiments, the computation uses the SEDDED scheme specifically designed for address protection. Once the memory controller 102 reads the values stored in the memory word 300, it already possesses the ECC for the address. At this point, the task of memory controller 102 is to verify whether the address check bits $(AC_1-AC_K)$ for the address stored in the memory word 300 match the computed ECC for that address.

This verification process ensures the integrity of the memory access operation for high-resiliency applications. If the stored address check bits $(AC_1-AC_K)$ and the computed ECC match, the address has not been corrupted during the memory access. However, if a mismatch is detected, it signals an error in the address, which the system can handle appropriately, such as signaling a fault condition. This address verification step is separate from and in addition to any data ECC that may be implemented for the actual contents of the memory word. By performing this address verification, the memory system can detect errors in the addressing mechanism, thereby enhancing memory operations' overall reliability and integrity.

Incorporating address check bits $(AC_1-AC_K)$ into the memory word 300 can provide a significant advantage without increasing memory latency. This efficiency is achieved through parallel processing of error checks. Due to memory operations' inherent timing, address check bits $(AC_1-AC_K)$ integration is accomplished without introducing additional latency.

The memory controller 102 receives the address first, which is standard in most memory architectures. During the interval between receiving the address and the arrival of the data bits $(D_1-D_N$, the memory controller 102 computes the address check bits $(AC_1-AC_K)$. This computation occurs concurrently with the system waiting for the data bits $(D_1-D_N$ to become available. When the data bits $(D_1-D_N$ finally arrive, it is accompanied by its corresponding data check bits $(DC_1-DC_M)$. At this juncture, the memory system is prepared to store three elements simultaneously: the data bits $(D_1-D_N$, the data check bits $(DC_1-DC_M)$, and the newly computed address check bits $(AC_1-AC_K)$. This approach effectively utilizes the natural delay between address reception and data availability, embedding the address check bits $(AC_1-AC_K)$ computation within this existing time frame. Consequently, the system perceives no extra latency from this additional error-checking mechanism, as it seamlessly integrates into the standard memory access cycle.

Digital systems generally employ various memory configurations, with single-bank and dual-bank being two primary approaches. Typically, single-bank memory uses one continuous block for data storage and retrieval, while dual-bank memory splits storage into two independently accessible banks. Single-bank systems perform one memory operation at a time. In contrast, dual-bank systems can execute two memory operations simultaneously, one on each bank, allowing for parallel access. Memory words, such as the memory word 300, are handled differently in these configurations. Single-bank systems access one memory word at a time sequentially, while dual-bank systems can access two memory words simultaneously. The bit access order can also vary between these configurations. In single-bank systems, bits in a memory word are typically accessed sequentially from, for example, least to most significant (or vice versa).

In embodiments, the protection mechanism for the write logic involves a write operation followed immediately by a read-to-verify operation for a memory word in each memory cut. The procedure is applied consistently across all memory cuts, providing a uniform data protection and verification approach throughout the system's memory structure.

In embodiments, the memory cell array provides a data bus width that accommodates the address check bits in addition to the data and data check bits.

Figure 4 illustrates an arrangement of an embodiment memory word 400, which may be implemented as memory word 300. Memory word 400 may be used for high-resilience type of memory applications. As shown, memory word 400 includes N number of data bits ($D_1$-$D_N$), M number of data check bits ($DC_1$-$DC_M$), and K number of address check bits ($AC_1$-$AC_K$). The total number of bits in memory word 400 is the sum of N, M, and K (i.e., total bits = N+M+K). The address check bits ($AC_1$-$AC_K$) are scrambled within memory word 400.

Memory word 400 may be implemented in a dual-bank memory system where it is divided into lower and upper halves across banks before the bits are accessed by the memory controller 102. In such a dual-bank memory system, the memory word 400 is split into two halves, with the lower-order bits in the first half and the higher-order bits in the second half. The first half of memory word 400 includes the first ($\frac{N+M+K}{2}$) number of bits of memory word 400, which encompass the least significant bits (LSBs). The second half includes the second ($\frac{N+M+K}{2}$) number of bits of memory word 400, encompassing the most significant bits (MSBs).

One bank of the dual-bank memory system handles the first half (i.e., the LSBs), and the other handles the second half (i.e., the MSBs), allowing for parallel access to different parts of the memory word 400.

In such an embodiment, the first address check bit ($AC_1$) of the address check bits ($AC_1$-$AC_K$) is arranged at the beginning of the first half of memory word 400, whereas the last address check bit ($AC_K$) of the address check bits ($AC_1$-$AC_K$) is arranged at the end of the second half of memory word 400.

In embodiments, the remaining address check bits ($AC_2$-$AC_{K-1}$) are uniformly distributed over the N number of data bits ($D_1$-$D_N$) and M number of data check bits ($DC_1$-$DC_M$) across the memory word 400. In such embodiments, the remaining address check bits ($AC_2$-$AC_{K-1}$) are arranged in a deliberate, structured arrangement across the memory word 400. The address check bits may follow a specific pattern or rule to ensure a balanced distribution. For example, the remaining address check bits ($AC_2$-$AC_{K-1}$) may be interleaving through the memory word 400 with the address check bits evenly separated from each other with the same number of bits.

In embodiments, the remaining address check bits ($AC_2$-$AC_{K-1}$) are randomly distributed over the N number of data bits ($D_1$-$D_N$) and M number of data check bits ($DC_1$-$DC_M$) across the memory word 400. In such embodiments, the remaining address check bits ($AC_2$-$AC_{K-1}$) are arranged without any specific pattern across the memory word 400. It is noted that although there may be no specific pattern to the arrangement of the address check bits, the arrangement remains consistent for the memory cell array 104 and known to the memory controller 102, such that the memory controller 102 can readily identify the address check bits within memory word 400.

In embodiments, the remaining address check bits ($AC_2$-$AC_{K-1}$) may be sequentially arranged over the N number of data bits ($D_1$-$D_N$) and M number of data check bits ($DC_1$-$DC_M$) across the memory word 400. For example, the second address check bit ($AC_2$) may be arranged between the first address check bit ($AC_1$) and the third address check bit ($AC_3$), the third address check bit ($AC_3$) may be arranged between the second address check bit ($AC_2$) and the fourth address check bit ($AC_4$), and so on.

In embodiments, the order of the remaining address check bits ($AC_2$-$AC_{K-1}$) may be scrambled over the N number of data bits ($D_1$-$D_N$) and M number of data check bits ($DC_1$-$DC_M$) across the memory word 400. For example, the second address check bit ($AC_2$) may be arranged between the third address check bit ($AC_3$) and the fourth address check bit ($AC_4$). It is noted that although the order of the address check bits may be scrambled, the order remains consistent for the memory cell array 104 and known to the memory controller 102, such that the memory controller 102 can readily identify the address check bits within memory word 400.

In embodiments, the LSB may be an address check bit different from the first address check bit ($AC_1$). However, at least one address check bit is arranged as the LSB. The arrangement of the address check bit as the LSB is known to memory controller 102.

In embodiments, the MSB may be an address check bit different from the last address check bit ($AC_K$). However, at least one address check bit is arranged as the MSB. The arrangement of the address check bit as the MSB is known to memory controller 102.

Figure 5 illustrates an arrangement of an embodiment memory word 500, which may be implemented as memory word 300. Memory word 500 may be used for high-resilience type of memory applications. As shown, memory word 500 includes N number of data bits ($D_1$-$D_N$), M number of data check bits ($DC_1$-$DC_M$), and K number of address check bits ($AC_1$-$AC_K$). The total number of bits in memory word 500 is the sum of N, M, and K (i.e., total bits = N+M+K). The address check bits ($AC_1$-$AC_K$) are scrambled within memory word 500.

Memory word 500 may be implemented in a single-bank memory system, where the entire memory word 500 is accessed as a unit in a single operation by the memory controller 102. In such a single-bank memory system, all bits of the word are read or written simultaneously, regardless of whether they are LSB or MSB. In an embodiment, the first address check bit ($AC_1$) of the address check bits ($AC_1$-$AC_K$) is arranged at the beginning (i.e., LSB) of the memory word 500, whereas the remaining address check bits ($AC_2$-$AC_K$) are dispersed through the memory word 500 (as shown). In embodiments, memory word 500 may be arranged as memory word 400. In embodiments, the LSB may be an address check bit different from the first address check bit ($AC_1$). However, at least one address check bit is arranged as the LSB. The arrangement of the address check bit as the LSB is known to memory controller 102.

In embodiments, the last address check bit ($AC_K$) of the address check bits ($AC_1$-$AC_K$) is arranged at the end (i.e., MSB) of the memory word 500, whereas the remaining address check bits ($AC_1$-$AC_{K-1}$) are dispersed through the memory word 500. In embodiments, the MSB may be an address check bit different from the last address check bit ($AC_K$). However, at least one address check bit is arranged as the MSB. The arrangement of the address check bit as the MSB is known to memory controller 102.

In embodiments, the remaining address check bits ($AC_1$-$AC_{K-1}$ or $AC_2$-$AC_K$) are uniformly distributed over the N number of data bits ($D_1$-$D_N$) and M number of data check bits ($DC_1$-$DC_M$) across the memory word 500. In such embodiments, the remaining address check bits ($AC_1$-$AC_{K-1}$ or $AC_2$-$AC_K$) are arranged in a deliberate, structured arrangement across the memory word 500. The address check bits may follow a specific pattern or rule to ensure a balanced distribution. For example, the remaining address check bits ($AC_1$-$AC_{K-1}$ or $AC_2$-$AC_K$) may be interleaving through the memory word 500 with the address check bits evenly separated from each other with the same number of bits.

In embodiments, the remaining address check bits ($AC_1$-$AC_{K-1}$ or $AC_2$-$AC_K$) are randomly distributed over the N number of data bits ($D_1$-$D_N$) and M number of data check bits ($DC_1$-$DC_M$) across the memory word 500. In such embodiments, the remaining address check bits ($AC_1$-$AC_{K-1}$ or $AC_2$-$AC_K$) are arranged without any specific pattern across the memory word 500. It is noted that although there may be no specific pattern to the arrangement of the address check bits, the arrangement remains consistent for the memory cell array 104 and known to the memory controller 102, such that the memory controller 102 can readily identify the address check bits within memory word 500.

In embodiments, the remaining address check bits ($AC_1$-$AC_{K-1}$ or $AC_2$-$AC_K$) may be sequentially arranged over the N number of data bits ($D_1$-$D_N$) and M number of data check bits ($DC_1$-$DC_M$) across the memory word 500. For example, the second address check bit ($AC_2$) may be arranged between the first address check bit ($AC_1$) and the third address check bit ($AC_3$), the third address check bit ($AC_3$) may be arranged between the second address check bit ($AC_2$) and the fourth address check bit ($AC_4$), and so on.

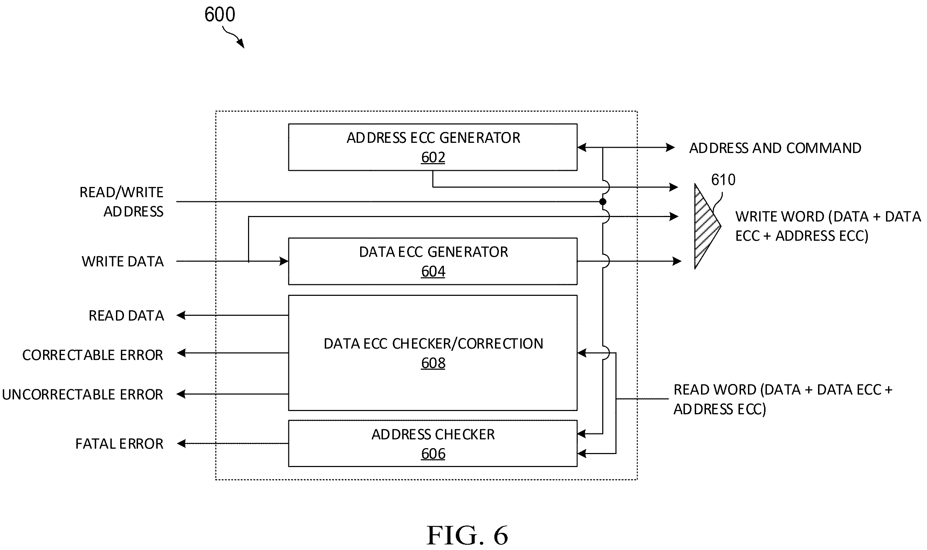

In embodiments, the order of the remaining address check bits ($AC_1$-$AC_{K-1}$ or $AC_2$-$AC_K$) may be scrambled over the N number of data bits ($D_1$-$D_N$) and M number of data check bits ($DC_1$-$DC_M$) across the memory word 500. For example, the second address check bit ($AC_2$) may be arranged between the third address check bit ($AC_3$) and the fourth address check bit ($AC_4$). It is noted that although the order of the address check bits may be scrambled, the order remains consistent for the memory cell array 104 and known to the memory controller 102, such that the memory controller 102 can readily identify the address check bits within memory word 500. Figure 6 illustrates an embodiment ECC logic circuit 600, which may be implemented as the logic circuit 112 of memory controller 102. ECC logic circuit 600 includes an address ECC generator circuit 602, a data ECC generator circuit 604, an address checker circuit 606, and a data ECC checker/correction circuit 608, which may (or may not) be arranged as shown.

In embodiments, the address ECC generator circuit 602 is configured to create error-correcting codes for read or write addresses received as input. In embodiments, the read or write address is in binary form. Once the address ECC generator circuit 602 receives the address, it applies a specific algorithm or mathematical function to the address data. The algorithm is designed to generate address check bits. In embodiments, the algorithm to generate the address check bits is based on the SEDDED ECC scheme. In embodiments, the address ECC generator circuit 602 may use XOR operations, matrix multiplications, or other mathematical techniques to create the address check bits.

In embodiments, the data ECC generator circuit 604 is configured to create error-correcting codes for write data it receives as input. In embodiments, the write data is in binary form. Once the data ECC generator circuit 604 receives the data bits, it applies a specific algorithm or mathematical function to the data. The algorithm is designed to generate the data check bits, which can be appended to the original data bits. The resulting combination of the data bits and the data check bits form the complete ECC. The nature of the algorithm can vary depending on the specific ECC scheme being used, such as Hamming or Reed-Solomon codes. In embodiments, the algorithm to generate the data check bits is based on the SECDED ECC scheme. The data ECC generator circuit 604 may use XOR operations, matrix multiplications, or other mathematical techniques to create the data check bits.

During the write operation, after the data check bits and the address check bits are generated, the data bits, the data check bits, and the address check bits are transmitted to the memory cell array 104 via the logic circuit 610. In embodiments, logic circuit 112 is configured to arrange the data bits, the data check bits, and the address check bits within each memory word based on a predetermined arrangement.

In embodiments, a logic circuit 610 of the memory controller 102 receives the data bits, the data check bits, and the address check bits from the ECC logic circuit 600. In embodiments, logic circuit 610 is embedded within the ECC logic circuit 600. In embodiments, logic circuit 610 is implemented as logic circuit 112.

Logic circuit 610 is configured to arrange the bits based on a predetermined configuration. For example, if the memory system is a dual-bank memory system, the LSB and MSB of the memory word being written to include an address check bit. If the memory system is a single-bank memory system, the LSB or the MSB (or both) of the memory word being written to includes an address check bit. The data bits, the data check bits, and the remaining address check bits are arranged within the memory word based on a predetermined arrangement.

During a read operation, the address checker circuit 606 is configured to receive the read address from the memory controller 102 and the memory word from the memory cell array 104, which corresponds to the read address. The address checker circuit 606 computes the check bits for the read address received from the memory controller 102 using the same algorithm or mathematical function applied by the address ECC generator circuit 602 to generate the address check bits stored in the memory word. In embodiments, the algorithm to generate the address check bits for the read address received from the memory controller 102 is based on the SEDDED ECC scheme.

Once the address checker circuit 606 receives the memory word, it parses out the address check bits from the memory word based on the predetermined arrangement of the bits within the memory word. The address checker circuit 606 compares the computed value with the properly arranged address check bits received from the memory word of the memory cell array 104 being read. In response to the two values not being equal, the address checker circuit 606 generates a fatal error. Otherwise, the address check is determined to be valid. During the read operation, the data ECC checker/correction circuit 608 receives the memory word from the memory cell array 104 corresponding to the read address. The data ECC checker/correction circuit 608 is configured to verify and, if necessary, correct data encoded with an ECC. The memory word includes the data bits, the data check bits, and the address check bits based on a predetermined arrangement corresponding to the dual- or single-bank memory system. The data ECC checker/correction circuit 608 parses out the data bits and the data check bits from the memory word based on the predetermined arrangement of the bits within the memory word. In embodiments where the address check is valid, the data faults are usually single-bit faults, which can be corrected.

The data ECC checker/correction circuit 608 calculates data check bits for the data bits using the same algorithm employed by the data ECC generator circuit 604. It then compares the calculated data check bits with the received data check bits for the memory word being read. If these match exactly, the data ECC checker/correction circuit 608 assumes no errors have occurred and passes the read data unchanged.

If a mismatch is detected, the data ECC checker/correction circuit 608 enters its error detection and correction phase. It analyzes the pattern of differences between the calculated and received data check bits. This pattern, often called the syndrome, provides information about the type and location of errors.

For single-bit errors, which are the most common, the data ECC checker/correction circuit 608 can typically pinpoint the exact bit that has been flipped and correct it automatically. This is done by inverting the identified erroneous bit.

In the case of multiple-bit errors, the capability of the data ECC checker/correction circuit 608 depends on the specific ECC scheme used. Some advanced ECC systems can correct multiple-bit errors, while others can only detect them. If the errors exceed the circuit's correction capability, it can flag the data as corrupted and notify the system of uncorrectable errors. If the data ECC checker/correction circuit 608 can correct the error, the data ECC checker/correction circuit 608 provides the correctable error as the output.

If the algorithm to generate the data check bits is based on the SECDED ECC scheme, the data ECC checker/correction circuit 608 determines whether there is a single error or multiple errors. If a single error is detected, the data ECC checker/correction circuit 608 corrects it, identifying and inverting the erroneous bit. However, if the data ECC checker/correction circuit 608 detects two errors, it enters a different mode of operation. In this case, the SECDED scheme is designed to detect the presence of these two errors but cannot correct them. The data ECC checker/correction circuit 608 flags the data as containing uncorrectable errors and can trigger an error signal or interrupt to notify the system. This notification allows the system to take appropriate action, such as initiating error recovery procedures.

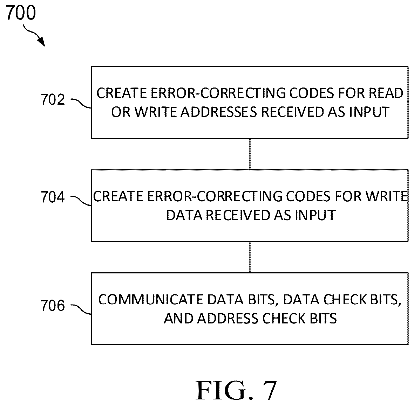

Figure 7 illustrates a flow chart of an embodiment method 700 for operating ECC logic circuit 600 in write mode. It is noted that all steps outlined in the flow chart of the method are not necessarily required and can be optional. Further, changes to the arrangement of the steps, removal of one or more steps and path connections, and addition of steps and path connections are similarly contemplated.

At step 702, address ECC generator circuit 602 is configured to create error-correcting codes for read or write addresses received as input. Once the address ECC generator circuit 602 receives the address, it applies a specific algorithm or mathematical function to the address data to generate address check bits. In embodiments, the algorithm to generate the address check bits is based on the SEDDED ECC scheme.

At step 704, data ECC generator circuit 604 creates error-correcting codes for write data it receives as input. Once the data ECC generator circuit 604 receives the data bits, it applies a specific algorithm or mathematical function to the data to generate the data check bits, which can be appended to the original data bits. In embodiments, the algorithm to generate the data check bits is based on the SECDED ECC scheme.

At step 706, the ECC logic circuit 600 communicates to the logic circuit 610 the data bits, the data check bits, and the address check bits, which are arranged based on a predetermined configuration. For example, if the memory system is a dual-bank memory system, the LSB and MSB of the memory word being written to include an address check bit. If the memory system is a single-bank memory system, the LSB or the MSB (or both) of the memory word being written to includes an address check bit. The data bits, the data check bits, and the remaining address check bits are arranged within the memory word based on a predetermined arrangement.

Subsequently to step 706, the data bits, the data check bits, and the address check bits are transmitted to the memory word being written to via the logic circuit 610.

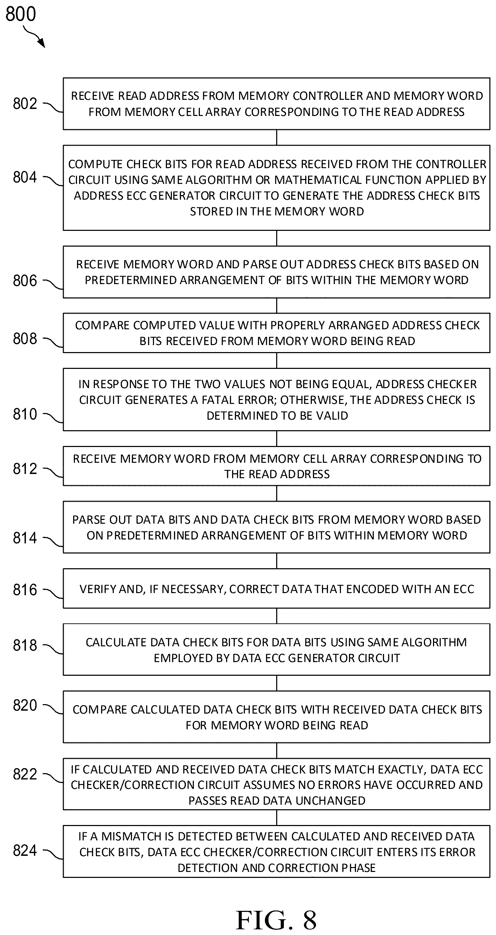

Figure 8 illustrates a flow chart of an embodiment method 800 for operating ECC logic circuit 600 in read mode. It is noted that all steps outlined in the flow chart of the method are not necessarily required and can be optional. Further, changes to the arrangement of the steps, removal of one or more steps and path connections, and addition of steps and path connections are similarly contemplated.

At step 802, address checker circuit 606 receives the read address from the memory controller 102 and the memory word from the memory cell array 104 corresponding to the read address.

At step 804, address checker circuit 606 computes the check bits for the read address received from the memory controller 102 using the same algorithm or mathematical function applied by the address ECC generator circuit 602 to generate the address check bits stored in the memory word. In embodiments, the algorithm to generate the address check bits for the read address received from the memory controller 102 102 is based on the SEDDED ECC scheme.

At step 806, address checker circuit 606 receives the memory word and parses out the address check bits from the memory word based on the predetermined arrangement of the bits within the memory word.

At step 808, address checker circuit 606 compares the computed value with the properly arranged address check bits received from the memory word being read. At step 810, in response to the two values not being equal, address checker circuit 606 generates a fatal error. Otherwise, the address check is determined to be valid. At step 812, data ECC checker/correction circuit 608 receives the memory word from the memory cell array 104 corresponding to the read address. The memory word includes the data bits, the data check bits, and the address check bits based on a predetermined arrangement corresponding to the dual- or single-bank memory system.

At step 814, data ECC checker/correction circuit 608 parses out the data bits and the data check bits from the memory word based on the predetermined arrangement of the bits within the memory word.

At step 816, data ECC checker/correction circuit 608 verifies and, if necessary, corrects data that has been encoded with an ECC.

At step 818, data ECC checker/correction circuit 608 calculates data check bits for the data bits using the same algorithm employed by the data ECC generator circuit 604.

At step 820, data ECC checker/correction circuit 608 compares the calculated data check bits with the received data check bits for the memory word being read.

At step 822, if the calculated and received data check bits match exactly, the data ECC checker/correction circuit 608 assumes no errors have occurred and passes the read data unchanged.

At step 824, if a mismatch is detected between the calculated and received data check bits, data ECC checker/correction circuit 608 enters its error detection and correction phase. It analyzes the pattern of differences between the calculated and received data check bits. For single-bit errors, which are the most common, data ECC checker/correction circuit 608 can typically pinpoint the exact bit that has been flipped and correct it automatically. This is done by inverting the identified erroneous bit.

As an additional step, in the case of multiple-bit errors, the capability of the data ECC checker/correction circuit 608 depends on the specific ECC scheme used. If the errors exceed the circuit's correction capability, it can flag the data as corrupted and notify the system of uncorrectable errors. If the data ECC checker/correction circuit 608 can correct the error, it provides the correctable error as the output. If the algorithm to generate the data check bits is based on the SECDED ECC scheme, the data ECC checker/correction circuit 608 determines whether there is a single error or multiple errors. If a single error is detected, the data ECC checker/correction circuit 608 corrects it, identifying and inverting the erroneous bit. However, if the data ECC checker/correction circuit 608 detects two errors, it enters a different mode of operation. In this case, the SECDED scheme is designed to detect the presence of these two errors but cannot correct them. The data ECC checker/correction circuit 608 flags the data as containing uncorrectable errors and can trigger an error signal or interrupt to notify the system. This notification allows the system to take appropriate action, such as initiating error recovery procedures.

A first aspect relates to a circuit, comprising a memory cell array configured to store memory words, each memory word comprising data bits, data check bits, and address check bits; an error correction code (ECC) logic circuit comprising an address ECC generator circuit configured to generate the address check bits; a data ECC generator circuit configured to generate the data check bits; an address ECC checker circuit configured to verify the address check bits; and a data ECC checker/correction circuit configured to verify and correct the data bits using the data check bits; and a logic circuit configured to arrange the data bits, the data check bits, and the address check bits within each memory word based on a predetermined arrangement.

In a first implementation form of the circuit, according to the first aspect as such, the address check bits are scrambled within each memory word.

In a second implementation form of the circuit, according to the first aspect as such or any preceding implementation form of the first aspect, at least one address check bit is arranged as a least significant bit of each memory word.

In a third implementation form of the circuit, according to the first aspect as such or any preceding implementation form of the first aspect, at least one address check bit is arranged as a most significant bit of each memory word.

In a fourth implementation form of the circuit, according to the first aspect as such or any preceding implementation form of the first aspect, the address ECC generator circuit is configured to generate the address check bits using a Single Error Detection Double Error Decoding (SEDDED) scheme.

In a fifth implementation form of the circuit, according to the first aspect as such or any preceding implementation form of the first aspect, the data ECC generator circuit is configured to generate the data check bits using a Single Error Correction Double Error Detection (SECDED) scheme.

In a sixth implementation form of the circuit, according to the first aspect as such or any preceding implementation form of the first aspect, the predetermined arrangement comprises uniformly distributing the address check bits across the memory word.

A second aspect relates to a system, comprising a memory controller; and a memory cell array coupled to the memory controller, the memory cell array configured to store memory words, each memory word comprising data bits, data check bits, and address check bits, wherein the memory controller comprises an error correction code (ECC) logic circuit configured to generate the address check bits and the data check bits for write operations; verify the address check bits and the data check bits for read operations; and correct errors in the data bits based on the data check bits.

In a first implementation form of the system, according to the second aspect as such, the memory cell array is configured as a dual-bank memory system.

In a second implementation form of the system, according to the second aspect as such or any preceding implementation form of the second aspect, a first address check bit is arranged at a beginning of a first half of each memory word, and a last address check bit is arranged at an end of a second half of each memory word.

In a third implementation form of the system, according to the second aspect as such or any preceding implementation form of the second aspect, the memory cell array is configured as a single-bank memory system.

In a fourth implementation form of the system, according to the second aspect as such or any preceding implementation form of the second aspect, at least one address check bit is arranged as either a least significant bit or a most significant bit of each memory word.

In a fifth implementation form of the system, according to the second aspect as such or any preceding implementation form of the second aspect, the ECC logic circuit is configured to generate a fatal error signal in response to detecting an address check bit mismatch during a read operation.

In a sixth implementation form of the system, according to the second aspect as such or any preceding implementation form of the second aspect, the memory controller is further configured to perform a read-to-verify operation immediately following a write operation for each memory word.

A third aspect relates to a method, comprising receiving, by an address ECC generator circuit, a write address; generating, by the address ECC generator circuit, address check bits based on the write address; receiving, by a data ECC generator circuit, write data; generating, by the data ECC generator circuit, data check bits based on the write data; arranging, by a logic circuit, data bits of the write data, the data check bits, and the address check bits within a memory word based on a predetermined arrangement; and writing the arranged memory word to a memory cell array.

In a first implementation form of the method, according to the third aspect as such, further comprising receiving, by an address ECC checker circuit, a read address and a memory word corresponding to the read address; computing, by the address ECC checker circuit, check bits for the read address; comparing the computed check bits with address check bits parsed from the memory word; and generating a fatal error in response to the computed check bits not matching the parsed address check bits.

In a second implementation form of the method, according to the third aspect as such or any preceding implementation form of the third aspect, further comprising receiving, by a data ECC checker/correction circuit, the memory word; parsing out data bits and data check bits from the memory word; calculating new data check bits based on the parsed data bits; comparing the calculated new data check bits with the parsed data check bits; and correcting the data bits if a mismatch is detected and the mismatch corresponds to a correctable error.

In a third implementation form of the method, according to the third aspect as such or any preceding implementation form of the third aspect, correcting the data bits comprises correcting a single-bit error by inverting an identified erroneous bit. In a fourth implementation form of the method, according to the third aspect as such or any preceding implementation form of the third aspect, further comprising generating an uncorrectable error signal if the mismatch corresponds to a multiple-bit error that exceeds a correction capability of the data ECC checker/correction circuit.

In a fifth implementation form of the method, according to the third aspect as such or any preceding implementation form of the third aspect, generating the address check bits is based on a Single Error Detection Double Error Decoding (SEDDED) scheme, and generating the data check bits is based on a Single Error Correction Double Error Detection (SECDED) scheme.

Although the description has been described in detail, it should be understood that various changes, substitutions, and alterations may be made without departing from the spirit and scope of this disclosure as defined by the appended claims. The same elements are designated with the same reference numbers in the various figures. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

The specification and drawings are, accordingly, to be regarded simply as an illustration of the disclosure as defined by the appended claims, and are contemplated to cover any and all modifications, variations, combinations, or equivalents that fall within the scope of the present disclosure.

**Claims**

1. A circuit, comprising:

    a memory cell array (104) configured to store memory words (400, 500), each memory word (400, 500) comprising data bits, data check bits, and address check bits;
    an error correction code, ECC, logic circuit (114, 600) comprising:

        an address ECC generator circuit (602) configured to generate the address check bits;
        a data ECC generator circuit (604) configured to generate the data check bits;
        an address ECC checker circuit (606) configured to verify the address check bits; and
        a data ECC checker/correction circuit (608) configured to verify and correct the data bits using the data check bits; and
        a logic circuit (112, 610) configured to arrange the data bits, the data check bits, and the address check bits within each memory word (400, 500) based on a predetermined arrangement.

2. The circuit of claim 1, wherein the address check bits are scrambled within each memory word (400, 500).

3. The circuit of claim 1, wherein at least one address check bit is arranged as a least significant bit of each memory word (400, 500).

4. The circuit of claim 1, wherein at least one address check bit is arranged as a most significant bit of each memory word (400, 500).

5. The circuit of claim 1, wherein the address ECC generator circuit (602) is configured to generate the address check bits using a Single Error Detection Double Error Decoding, SEDDED, scheme.

6. The circuit of claim 1, wherein the data ECC generator circuit (604) is configured to generate the data check bits using a Single Error Correction Double Error Detection, SECDED, scheme.

7. The circuit of claim 1, wherein the predetermined arrangement comprises uniformly distributing the address check bits across the memory word (400, 500).

8. A system, comprising:

    a memory controller (102); and
    a memory cell array (104) coupled to the memory controller (102), the memory cell array (104) configured to store memory words (400, 500), each memory word (400, 500) comprising data bits, data check bits, and address check bits, wherein the memory controller (102) comprises an error correction code, ECC, logic circuit (114, 600) configured to:

        generate the address check bits and the data check bits for write operations;
        verify the address check bits and the data check bits for read operations; and
        correct errors in the data bits based on the data check bits.

9. The system of claim 8, wherein the memory cell array (104) is configured as a dual-bank memory system, in particular a first address check bit being arranged at a beginning of a first half of each memory word (400, 500), and a last address check bit being arranged at an end of a second half of each memory word (400, 500).

10. The system of claim 8, wherein the memory cell array (104) is configured as a single-bank memory system, in particular at least one address check bit being arranged as either a least significant bit or a most significant bit of each memory word (400, 500).

11. The system of claim 8, wherein the ECC logic circuit (114, 600) is configured to generate a fatal error signal in response to detecting an address check bit mismatch during a read operation.

12. The system of claim 8, wherein the memory controller (102) is further configured to perform a read-to-verify operation immediately following a write operation for each memory word (400, 500).

13. A method, comprising:

   receiving, by an address ECC generator circuit (602), a write address;
   generating, by the address ECC generator circuit (602), address check bits based on the write address;
   receiving, by a data ECC generator circuit (604), write data;
   generating, by the data ECC generator circuit (604), data check bits based on the write data;
   arranging, by a logic circuit (112, 610), data bits of the write data, the data check bits, and the address check bits within a memory word (400, 500) based on a predetermined arrangement; and
   writing the arranged memory word (400, 500) to a memory cell array (104).

14. The method of claim 13, further comprising:

   receiving, by an address ECC checker circuit (606), a read address and a memory word (400, 500) corresponding to the read address;
   computing, by the address ECC checker circuit (606), check bits for the read address;
   comparing the computed check bits with address check bits parsed from the memory word (400, 500); and
   generating a fatal error in response to the computed check bits not matching the parsed address check bits, in particular the .

15. The method of claim 14, further comprising:

   receiving, by a data ECC checker/correction circuit (608), the memory word (400, 500);
   parsing out data bits and data check bits from the memory word (400, 500);
   calculating new data check bits based on the parsed data bits;
   comparing the calculated new data check bits with the parsed data check bits; and
correcting the data bits if a mismatch is detected and the mismatch corresponds to a correctable error, in particular correcting the data bits comprising correcting a single-bit error by inverting an identified erroneous bit, in particular the method further comprising generating an uncorrectable error signal if the mismatch corresponds to a multiple-bit error that exceeds a correction capability of the data ECC checker/-correction circuit (608).

16. The method of claim 13, wherein generating the address check bits is based on a Single Error Detection Double Error Decoding, SEDDED, scheme, and generating the data check bits is based on a Single Error Correction Double Error Detection, SECDED, scheme.

100

ADDRESS DECODER
110

ROW DECODER
106

MEMORY CELL ARRAY
104

MEMORY CONTROLLER
102

LOGIC CIRCUIT
112

ECC LOGIC CIRCUIT
114

COLUMN DECODER
108

FIG. 1

200

204

DATA BITS

DATA CHECK BITS

$D_1$ | $D_2$ | $D_3$ ● ● ● $D_N$    $DC_1$ ● ● ● $DC_M$

202

FIG. 2

300

DATA BITS | DATA CHECK BITS | ADDRESS CHECK BITS

304 306

| $D_1$ | $D_2$ | $D_3$ | • • • | $D_N$ | | $DC_1$ | • • • | $DC_M$ | | $AC_1$ | • • • | $AC_K$ |

302

**FIG. 3**

400

| $AC_1$ | $D_1$ | $D_2$ | • • • | $AC_2$ | • • • | $AC_3$ | • • • | $DC_1$ | • • • | $DC_M$ | • • • | $AC_K$ |

**FIG. 4**

500

| $AC_1$ | $D_1$ | $D_2$ | • • • | $AC_2$ | • • • | $AC_3$ | • • • | $D_N$ | • • • | $DC_1$ | • • • | $DC_M$ |

**FIG. 5**

**600**

ADDRESS ECC GENERATOR
602

ADDRESS AND COMMAND

READ/WRITE ADDRESS

610

WRITE WORD (DATA + DATA ECC + ADDRESS ECC)

WRITE DATA

DATA ECC GENERATOR
604

READ DATA

DATA ECC CHECKER/CORRECTION
608

CORRECTABLE ERROR

UNCORRECTABLE ERROR

READ WORD (DATA + DATA ECC + ADDRESS ECC)

ADDRESS CHECKER
606

FATAL ERROR

FIG. 6

700

CREATE ERROR-CORRECTING CODES FOR READ
702 — OR WRITE ADDRESSES RECEIVED AS INPUT

704 — CREATE ERROR-CORRECTING CODES FOR WRITE
DATA RECEIVED AS INPUT

706 — COMMUNICATE DATA BITS, DATA CHECK BITS,
AND ADDRESS CHECK BITS

FIG. 7

800

802 — RECEIVE READ ADDRESS FROM MEMORY CONTROLLER AND MEMORY WORD FROM MEMORY CELL ARRAY CORRESPONDING TO THE READ ADDRESS

804 — COMPUTE CHECK BITS FOR READ ADDRESS RECEIVED FROM THE CONTROLLER CIRCUIT USING SAME ALGORITHM OR MATHEMATICAL FUNCTION APPLIED BY ADDRESS ECC GENERATOR CIRCUIT TO GENERATE THE ADDRESS CHECK BITS STORED IN THE MEMORY WORD

806 — RECEIVE MEMORY WORD AND PARSE OUT ADDRESS CHECK BITS BASED ON PREDETERMINED ARRANGEMENT OF BITS WITHIN THE MEMORY WORD

808 — COMPARE COMPUTED VALUE WITH PROPERLY ARRANGED ADDRESS CHECK BITS RECEIVED FROM MEMORY WORD BEING READ

810 — IN RESPONSE TO THE TWO VALUES NOT BEING EQUAL, ADDRESS CHECKER CIRCUIT GENERATES A FATAL ERROR; OTHERWISE, THE ADDRESS CHECK IS DETERMINED TO BE VALID

812 — RECEIVE MEMORY WORD FROM MEMORY CELL ARRAY CORRESPONDING TO THE READ ADDRESS

814 — PARSE OUT DATA BITS AND DATA CHECK BITS FROM MEMORY WORD BASED ON PREDETERMINED ARRANGEMENT OF BITS WITHIN MEMORY WORD

816 — VERIFY AND, IF NECESSARY, CORRECT DATA THAT ENCODED WITH AN ECC

818 — CALCULATE DATA CHECK BITS FOR DATA BITS USING SAME ALGORITHM EMPLOYED BY DATA ECC GENERATOR CIRCUIT

820 — COMPARE CALCULATED DATA CHECK BITS WITH RECEIVED DATA CHECK BITS FOR MEMORY WORD BEING READ

822 — IF CALCULATED AND RECEIVED DATA CHECK BITS MATCH EXACTLY, DATA ECC CHECKER/CORRECTION CIRCUIT ASSUMES NO ERRORS HAVE OCCURRED AND PASSES READ DATA UNCHANGED

824 — IF A MISMATCH IS DETECTED BETWEEN CALCULATED AND RECEIVED DATA CHECK BITS, DATA ECC CHECKER/CORRECTION CIRCUIT ENTERS ITS ERROR DETECTION AND CORRECTION PHASE

FIG. 8

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 203 890 B1 (NORMOYLE KEVIN B [US]) 10 April 2007 (2007-04-10) * the whole document * ----- | 1-16 | INV. G06F11/10 |
| X | US 7 293 221 B1 (WONG SAMSON S [US] ET AL) 6 November 2007 (2007-11-06) * the whole document * ----- | 1-16 | |
| X | US 11 023 310 B1 (GRIGORYAN HAYK [AM] ET AL) 1 June 2021 (2021-06-01) * the whole document * ----- | 1-16 | |

**TECHNICAL FIELDS SEARCHED (IPC)**

G06F

The present search report has been drawn up for all claims

| Place of search | Date of completion of the search | Examiner |
|---|---|---|
| Munich | 1 March 2026 | Bauer, Regine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8937

This annex lists the patent family members relating to the patent documents cited in the above-mentioned European search report.
The members are as contained in the European Patent Office EDP file on
The European Patent Office is in no way liable for these particulars which are merely given for the purpose of information.

01-03-2026

| Patent document cited in search report | | Publication date | Patent family member(s) | Publication date |
|---|---|---|---|---|
| US 7203890 | B1 | 10-04-2007 | NONE | |
| US 7293221 | B1 | 06-11-2007 | NONE | |
| US 11023310 | B1 | 01-06-2021 | NONE | |

EPO FORM P0459

For more details about this annex : see Official Journal of the European Patent Office, No. 12/82